# EUROPÄISCHE PATENTSCHRIFT

(11) **EP 2 995 171 B1**
(45) Veröffentlichungstag und Bekanntmachung des Hinweises auf die Patenterteilung: **13.09.2017**
(21) Anmeldenummer: 14721371.4
(22) Anmeldetag: 02.05.2014
(51) Int. Cl.: H05B 6/06, G05D 23/24, G01K 7/36, G01K 7/42

(54) **VERFAHREN UND VORRICHTUNG ZUR BESTIMMUNG DER OBERFLÄCHENTEMPERATUR EINES INDUKTIV BEHEIZTEN WALZENMANTELS**
METHOD AND DEVICE FOR DETERMINING THE SURFACE TEMPERATURE OF AN INDUCTIVELY HEATED ROLLING JACKET
PROCÉDÉ ET DISPOSITIF POUR DETERMINER LA TEMPERATURE DE SURFACE D'UN ROULEAU DE LAMINAGE CHAUFFÉ PAR INDUCTION

(30) Priorität: 10.05.2013 DE 102013008068
(43) Veröffentlichungstag der Anmeldung: 16.03.2016
(73) Patentinhaber: Oerlikon Textile GmbH & Co. KG, 42897 Remscheid (DE)
(72) Erfinder: ZENZEN, Dirk, 51377 Leverkusen (DE)
(74) Vertreter: Neumann, Ditmar
(86) Internationale Anmeldenummer: PCT/EP2014/059010
(87) Internationale Veröffentlichungsnummer: WO 2014/180750

(56) Entgegenhaltungen:
- EP-A1- 1 302 818
- WO-A1-85/01532
- CH-A- 527 934
- DE-A1-102010 051 559
- DE-C1- 19 730 531
- DE-C1- 19 843 990

## Beschreibung

Die Erfindung betrifft eine Verfahren zur Bestimmung einer Oberflächentemperatur eines induktiv beheizten Walzenmantels gemäß dem Oberbegriff des Anspruchs 1 sowie eine Vorrichtung zur Bestimmung einer Oberflächentemperatur eines induktiv beheizten Walzenmantels gemäß dem Oberbegriff des Anspruchs 7.

Ein gattungsgemäßes Verfahren sowie eine gattungsgemäße Vorrichtung sind aus der EP 0 892 585 A2 bekannt.

Bei der Herstellung von Fasern oder Fäden ist es allgemein bekannt, zur Führung und insbesondere zur Wärmebehandlung der Fäden, Walzen oder Galetten zu verwenden, die einen beheizten Walzenmantel aufweisen, an deren Oberfläche die Fasern oder Fäden geführt werden. Bei derartigen Herstellungsprozessen ist die Einhaltung vorbestimmter Oberflächentemperaturen an dem Walzenmantel von besonderer Bedeutung, um die gewünschten physikalischen Eigenschaften an den Fasern und den Fäden zu erhalten. Insoweit ist es desweiteren bekannt, die Oberflächentemperatur des Walzenmantels zu überwachen. Die Überwachung wird dabei vorzugsweise durch Temperatursensoren ausgeführt. Derartige Verfahren und Vorrichtungen zur Bestimmung einer Oberflächentemperatur besitzen jedoch grundsätzlich den Nachteil der Signalübertragung, der zwischen den rotierenden Walzenmantel und einer stationären Einrichtung zu erfolgen hat.

Derartige Verfahren und Vorrichtungen sind daher nicht Gegenstand dieser Erfindung.

Aus der EP 0 892 585 A2 ist ein Verfahren und eine Vorrichtung zur Bestimmung einer Oberflächentemperatur eines induktiv beheizten Walzenmantels bekannt, bei welchem die Oberflächentemperatur sensorlos bestimmt wird. Hierzu wird eine Induktionsspule genutzt, die in dem Walzenmantel einen Kurzschlussstrom induziert. Da der aus einem metallischen Werkstoff gebildet Walzenmantel eine von der Temperatur abhängige elektrische Leitfähigkeit aufweist, lässt sich aus den Messwerten eines Stromes und einer Spannung der Spule die dazugehörige Temperatur des Walzenmantels bestimmen.

Bei dem bekannten Verfahren und der bekannten Vorrichtung wird die Induktionsspule mit eine Netzspannung betrieben. Dabei erzeugt die Induktionsspule ein Magnetfeld, das sich in allen Richtungen ausbreitet. Insoweit werden auch Umgebungsbereich des Walzenmantels wie insbesondere Walzenträger, Stirnwände oder Antriebswellen miteinbezogen, so dass die in der Umgebung induzierten Ströme ebenfalls zu einer Erwärmung dieser Teile führt. Auch diese Temperaturen der benachbarten Einrichtungen beeinflussen den Strom und die Spannung in der Spulenwicklung. Derartige Nebeneffekte führen dazu, dass die Oberflächentemperatur des Walzenmantels nur mit geringer Genauigkeit zu bestimmen ist.

Aus der DE 197 30 531 C1 sind ein Verfahren sowie eine Vorrichtung zur Bestimmung der Temperatur eines induktiv beheizten Elements, etwa einer Galette einer Spinnereimaschine zur Herstellung von synthetischen Fäden bekannt.

Es ist nun Aufgabe der Erfindung, ein Verfahren und eine Vorrichtung zur Bestimmung einer Oberflächentemperatur eines induktiv beheizten Walzenmantels der gattungsgemäßen Art derart weiterzubilden, dass die Oberflächentemperatur des Walzenmantels mit einer möglichst großen Genauigkeit kontaktlos ermittelt werden kann.

Diese Aufgabe wird erfindungsgemäß für ein Verfahren dadurch gelöst, dass die Spule in dem Stromkreis mit einem Kondensator zu einem Schwingkreis geschaltet wird und dass der Schwingkreis mit einer Wechselspannungsfrequenz im Bereich von 3.000 Hz bis 30.000 Hz betrieben wird.

Für eine Vorrichtung liegt die erfindungsgemäße Lösung darin, dass die Induktionsspule in dem Stromkreis mit einem Kondensator zu einem Schwingkreis geschaltet ist und dass die Spannungsquelle zur Versorgung des Stromkreises ein Spannungsmodul aufweist, welches eine Wechselspannung mit einer Frequenz im Bereich von 3.000 Hz bis 30.000 Hz erzeugt.

Vorteilhafte Weiterbildungen der Erfindung sind durch die Merkmale und Merkmalskombinationen der jeweiligen Unteransprüche definiert.

Die Erfindung zeichnet sich dadurch aus, dass die im Schwingkreis geschaltete Induktionsspule ein auf den Walzenmantel konzentriertes Magnetfeld erzeugt werden kann. Die Wechselspannungsfrequenz im Bereich von 3.000 Hz bis 30.000 Hz begünstigt den Effekt der Stromverdrängung, so dass die Feldlinien des Magnetfeldes sich direkt in einer Mantelzone des Walzenmantels konzentrieren, die die Induktionsspule umschließt. Eine Erwärmung der umliegenden Bereiche lässt sich dadurch vermeiden. Insoweit werden die an der Induktionsspule messbaren Parameter ausschließlich durch die Manteltemperatur des Walzenmantels beeinflusst. So besteht die Möglichkeit, die Oberflächentemperatur des Walzenmantels mit sehr hoher Genauigkeit allein aus den charakteristischen Messwerten der temperaturabhängigen Parameter der Schwingkreise zu bestimmen.

Bei einer Erwärmung des Walzenmantels verändert sich die elektrische Leitfähigkeit des Walzenmantels. Bei steigender Temperatur fällt die elektrische Leitfähigkeit des Walzenmantels ab. Damit erhöht sich der Wirkwiderstand des Walzenmantels. Somit lassen sich grundsätzlich die magnetischen und elektrischen Parameter der Induktionsspule nutzen, die von der elektrischen Leitfähigkeit und von dem Wirkwiderstand des Walzenmantels beeinflusst werden. So lässt sich gemäß einer vorteilhaften Weiterbildung der Erfindung als Parameter eine Induktivität der Induktionsspule in einer Betriebsphase des Schwingkreises oder in einer Ruhephase des Schwingkreises messen. Da die vom Wirkwiderstand und der Leitfähigkeit abhängige Eindringtiefe maßgeblich die Induktivität des magnetischen Kreises beeinflusst, lässt sich aus dem Messwert der Induktivität unmittelbar ein Rückschluss auf die jeweilige Oberflächentemperatur ableiten. Die Messung der Induktivität kann sowohl während einer Betriebsphase des Schwingkreises oder in einer Ruhephase des Schwingkreises erfolgen. Die Betriebsphase des Schwingkreises ist der Zustand, in dem die Spannungsquelle aktiviert ist. In der Ruhephase des Schwingkreises ist die Spannungsquelle dagegen abgeschaltet. Je nach Zustand sind entsprechende Messmittel zur Messung einer Induktivität der Induktionsspule zu wählen.

Grundsätzlich sind eine Reihe von physikalischen Parametern geeignet, um aus der Messung eines Parameters des Stromkreises und gespeicherten Daten ein Ist-Wert der Oberflächentemperatur zu ermitteln. So könnte als Parameter ein Phasenwinkel zwischen Strom und Spannung im Schwingungskreis gemessen werden. Ebenso sind die Verhältnisse zwischen den Amplituden der Erregerspannung und der Kondensatorspannung sowie der Amplituden der Erregerspannung und der Spulspannung temperaturbeeinflusst, so dass auch diese Amplitudenverhältnisse Rückschlüsse auf die Oberflächentemperatur zulassen. Desweiteren können auch Ermittlungen der Feldstärke im Luftspalt im Verhältnis zu einer Erregerspannung Temperaturbestimmungen ermöglichen.

Eine besonders bevorzugte Variante stellt jedoch die Weiterbildung der Erfindung dar, bei welcher als Parameter ein Strom und eine Spannung des Schwingkreises in einer Betriebsphase des Schwingkreises gemessen wird.

Hierzu weist die erfindungsgemäße Vorrichtung eine Strommesseinrichtung zur Messung eines Stromes und eine Spannungsmesseinrichtung zur Messung einer Spannung auf, die dem Schwingkreis zugeordnet sind. So hat sich gezeigt, dass das Verhältnis zwischen der Spannung und dem Strom des Schwingkreises eine relativ starke Temperaturabhängigkeit zeigt.

Um innerhalb der Betriebsphase des Schwingkreises eindeutige, auf eine Oberflächentemperatur zurückführende Messergebnisse zu erhalten, wird gemäß einer bevorzugten Verfahrensvariante der Strom und die Spannung des Schwingkreises nach Ablauf einer Einschwingphase des Schwingkreises gemessen, wobei ein Effektivwert des Stromes und ein Effektivwert der Spannung während einer Messphase bestimmt wird. Die Messphase ist üblicherweise derart bestimmt, dass sowohl zu Beginn als auch das Ende mit einem definierten Nulldurchgang der Spannung einhergeht.

Zur Einstellung der Betriebsphasen und der Ruhephasen des Schwingkreises ist gemäß einer Weiterbildung der erfindungsgemäßen Vorrichtung das Spannungsmodul zur Aktivierung und Deaktivierung des Schwingkreises mit eine Steuereinrichtung gekoppelt. Somit können die Betriebsphasen und Messphasen aufeinander abgestimmt werden.

Es hat sich als besonders vorteilhaft herausgestellt, dass die für die Temperaturerfassung vorgesehene Induktionsspule vorteilhaft gleichzeitig den betreffenden Bereich des Walzenmantels erwärmt. Insoweit ist die Verfahrensvariante besonders vorteilhaft, bei welcher die Induktionsspule als eine Heizspule zur Erwärmung des Walzenmantels genutzt wird.

Die erfindungsgemäße Vorrichtung hat hierzu die Induktionsspule als eine Heizspule ausgebildet, die an einem Spulenhalter im kurzen Abstand zu dem Walzenmantel gehalten ist.

So lässt sich gemäß einer Weiterbildung der Erfindung die Regelung der Heizspule vorteilhaft mit der Ist-Wert-Bestimmung der Oberflächentemperatur verbinden.

Gemäß einer vorteilhaften Weiterbildung der erfindungsgemäßen Vorrichtung ist die Steuereinrichtung mit der Auswerteeinrichtung verbunden, wobei die Steuereinrichtung oder die Auswertungseinrichtung einen Komperator zum Abgleich von Oberflächentemperaturen des Walzenmantels aufweist. Damit ist ein ständiger Abgleich zwischen einem Ist-Wert der Oberflächentemperatur und einem Soll-Wert der Oberflächentemperatur möglich, so dass bei unzulässigen Abweichungen eine Aktivierung oder Deaktivierung des Spannungsmoduls erfolgen kann.

Um die gewünschten Frequenzen im Bereich von 3.000 Hz bis 30.000 Hz im Schwingungskreis zu realisieren, weist die Induktionsspule vorzugsweise eine Anzahl von Windungen im Bereich von 10 bis 50 auf. Damit lässt sich die Konzentration der Feldlinien noch weiter verbessern.

Zur weiteren Erläuterung des erfindungsgemäßen Verfahrens und der erfindungsgemäßen Vorrichtung zur Bestimmung einer Oberflächentemperatur eines induktiv beheizten Walzenmantels werden einige Ausführungsbeispiele der erfindungsgemäßen Vorrichtung anhand der beigefügten Figuren näher erläutert.

Es stellen dar:
- Fig. 1: schematisch ein erstes Ausführungsbeispiel der erfindungsgemäßen Vorrichtung zur Bestimmung einer Oberflächentemperatur eines induktiv beheizten Walzenmantels
- Fig. 2: schematisch ein weiteres Ausführungsbeispiel der erfindungsgemäßen Vorrichtung zur Bestimmung einer Oberflächentemperatur eines induktiv beheizten Walzenmantels
- Fig. 3: schematisch ein Spannungsverlauf eines Spannungsmoduls des Ausführungsbeispiels nach Fig. 1 oder 2
- Fig. 4: schematisch eine in einer Galette integrierte erfindungsgemäße Vorrichtung zur Bestimmung einer Oberflächentemperatur eines induktiv beheizten Walzenmantels

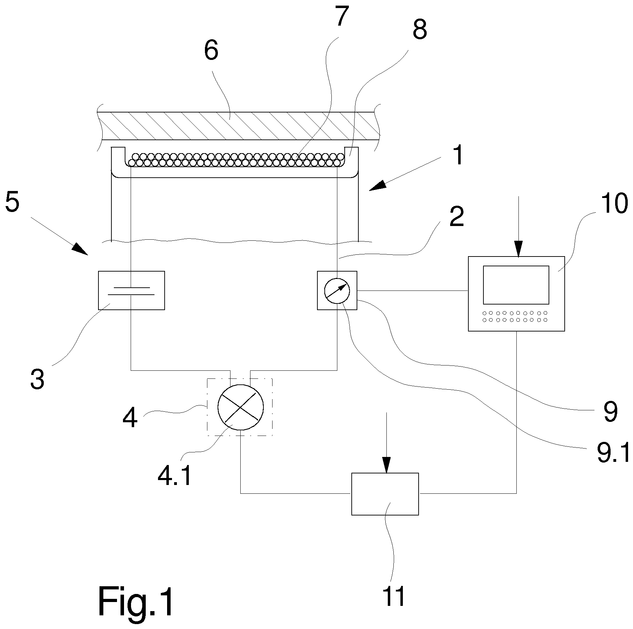

In Fig. 1 ist ein erstes Ausführungsbeispiel der erfindungsgemäßen Vorrichtung zur Bestimmung einer Oberflächentemperatur eines induktiv beheizten Walzenmantels schematisch dargestellt. Der Walzenmantel 6 ist in einem Teilstück gezeigt und umschließt eine dem Walzenmantel 6 im kurzen Abstand konzentrisch zugeordnete Induktionsspule 1. Die Induktionsspule 1 ist in diesem Ausführungsbeispiel schematisch durch einen Spulenträger 8 und einer größeren Anzahl von Windungen 7 gezeigt.

Die Induktionsspule 1 ist in einem Stromkreis 2 mit einem Kondensator 3 und einer Spannungsquelle 4 zu einem Schwingkreis 5 geschaltet. Die Spannungsquelle 4 ist mit einem Steuergerät 11 gekoppelt, durch welches ein Spannungsmodul 4.1 der Spannungsquelle 4 aktiviert oder deaktiviert wird.

Dem Schwingkreis 5 ist eine Messvorrichtung 9 mit einem Messmittel 9.1 zugeordnet. In dem Schwingkreis 5 wird ein Parameter des Schwingkreises 5 durch ein Messmittel 9.1 erfasst und einer Auswertungseinrichtung 10 zugeführt, die mit dem Messmittel 9.1 verbunden ist. In diesem Ausführungsbeispiel ist das Messmittel 9.1 derart ausgebildet, um eine Induktivität der Induktionsspule 1 zu messen.

In einer Betriebsphase, die über das Steuergerät 11 an dem Spannungsmodul 4.1 einstellbar ist, wird über das Spannungsmodul 4.1 eine Wechselspannung mit einer Spannungsfrequenz in einem Bereich von 3.000 Hz bis 30.000 Hz erzeugt. In dem Schwingkreis 5 erfolgt dadurch eine sich ständig wiederholende Aufladung und Endladung des Kondensators 3, der eine sich wiederholende Magnetisierung des Walzenmantels 6 durch die Induktionsspule 1 ausführt und einen Strom induziert.

In dieser Betriebsphase wird die Induktivität der Induktionsspule 1 durch das Messmittel 9.1 gemessen und der Auswerteeinrichtung 10 zugeführt. Die Messsignale werden innerhalb der Auswerteeinrichtung 10 nach vorgegebenen Algorithmen ausgewertet und mit gespeicherten Daten kombiniert, um einen Ist-Wert der Oberflächentemperatur des Walzenmantels 6 zu erhalten. Hierzu weist die Auswerteeinrichtung 10 vorzugsweise ein Visualisierungsgerät oder eine Ausgabeeinheit auf. Nach erfolgter Messung lässt sich über die Auswerteeinrichtung 10 und dem Steuergerät 11 das Spannungsmodul 4.1 der Spannungsquelle 4 deaktivieren, so dass der Schwingkreis 5 in eine Ruhephase überführt wird.

Je nach Wahl der Messvorrichtung 9 besteht alternativ auch die Möglichkeit, die Induktivität der Induktionsspule 1 während der Ruhephase des Schwingkreises 5 zu messen. Hierbei werden Messströme genutzt, um entsprechende temperaturabhängige Messwerte der Induktivität zu erhalten.

Grundsätzlich lassen sich auch andere Parameter des Schwingkreises erfassen, um die Temperatur im Walzenmantel zu bestimmen. Wesentlich hierbei ist, dass eine Kopplung zwischen dem Walzenmantel und der im Schwingkreis geschalteten Induktionsspule besteht. Die Parameter, die insbesondere durch die temperaturabhängige Leitfähigkeit des Walzenmantels oder durch die temperaturabhängige Permeabilität des Walzenmantels beeinflusst werden, sind besonders geeignet, um die jeweilige Temperatur des Walzenmantels zu ermitteln. Neben der Induktivität sind als Parameter auch der Phasenwinkel zwischen dem Strom und der Spannung im Schwingkreis, ein Amplitudenverhältnis zwischen der Erregerspannung und der Kondensatorspannung, ein Amplitudenverhältnis der Erregerspannung und der Spulenspannung oder auch die Feldstärke im Luftspalt im Verhältnis zur Erregerspannung geeignet.

Unabhängig, welche Parameter als Messwerte zur Ermittlung der Temperatur gewählt werden, ist die Speisung des Schwingungskreises mit einer Spannungsfrequenz im Bereich von 3.000 Hz bis 30.000 Hz erforderlich. Die Höhe der Spannungsfrequenz wirkt sich dabei unmittelbar auf die Konzentration der Feldlinien des Magnetfeldes im Walzenmantel aus. Insoweit sind hohe Spannungsfrequenzen besonders geeignet, um einen ausgeprägten Effekt der Stromverlängerung zu erhalten, so dass sich die magnetischen Feldlinien direkt in der Mantelzone des Walzenmantels konzentriert. So können Magnetfeldstreuungen und Fremdeinwirkungen auf den Schwingkreis vorteilhaft vermieden werden.

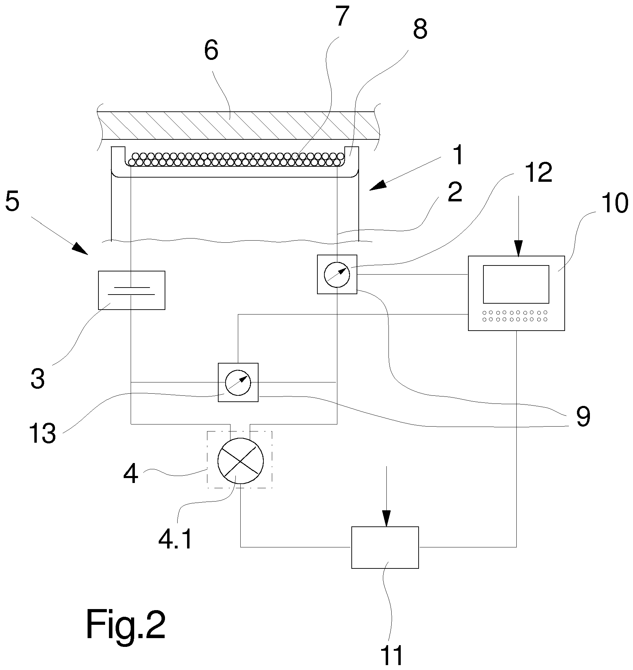

Um möglichst mit einfachen Algorithmen einen Ist-Wert der Oberflächentemperatur des Walzenmantels zu erhalten, ist in Fig. 2 ein weiteres Ausführungsbeispiel der erfindungsgemäßen Vorrichtung schematisch dargestellt. Das Ausführungsbeispiel nach Fig. 2 ist im wesentlichen identisch zu dem Ausführungsbeispiel nach Fig. 1, wobei in diesem Ausführungsbeispiel die Messvorrichtung 9 eine Strommesseinrichtung 12 und eine Spannungsmesseinrichtung 13 aufweist. Die Strommesseinrichtung 12 und die Spannungsmesseinrichtung 13 sind dem Schwingkreis 5 zugeordnet, um einen Effektivwert des Stromes im Stromkreis 2 und einen Effektivwert der Spannung zu erhalten. Die Strommesseinrichtung 12 und die Spannungsmesseinrichtung 13 sind mit der Auswertungseinrichtung 10 verbunden. Innerhalb der Auswerteinrichtung 10 wird ein Quotient aus der effektiven Spannung und dem effektiven Strom gebildet. Mit Hilfe von hinterlegten Eichkurven, lässt sich unmittelbar aus dem Wert des Quotienten ein entsprechender Ist-Wert der Oberflächentemperatur des Walzenmantels bestimmen. Derartige Eichkurven sind üblicherweise vorbestimmt und in der Auswertungseinrichtung 10 hinterlegt. Die Messung des Stromes und der Spannung in dem Schwingkreis 5 werden in einer Betriebsphase des Schwingkreises 5 durchgeführt. In dieser Phase ist das Spannungsmodul 4 über das Steuergerät 11 aktiviert.

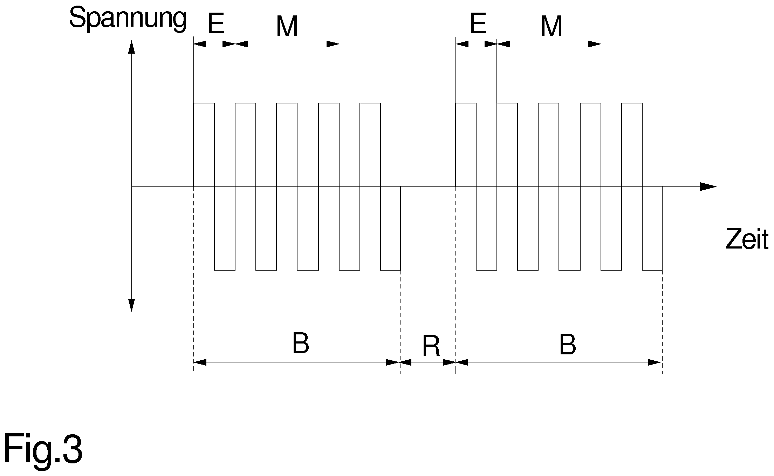

In Fig. 3 ist schematisch der Verlauf der Spannung, die durch das Spannungsmodul 4 erzeugt wird. Hierbei sind auf der Abszisse zwei aufeinanderfolgende Betriebsphasen zur Durchführung einer Messung dargestellt. Die Betriebsphase ist mit dem Kennbuchstaben B und eine zwischen den Betriebsphasen vorherrschende Ruhephase mit dem Kennbuchstaben R gekennzeichnet. Zur Durchführung der Messung in dem Schwingkreis 5 wird zunächst eine Einschwingphase zu Beginn der Betriebsphase abgewartet. Insofern ist die Messphase nicht identisch mit der Zeitdauer der Betriebsphase. In Fig. 3 ist die Einschwingphase mit dem Kennbuchstaben E und die Messphase mit dem Kennbuchstaben M gekennzeichnet. Wesentlich hierbei ist, dass der Start der Messphase und das Ende der Messphase jeweils mit einem Nulldurchgang der Spannung einhergehen, was insbesondere die Effektivwertbestimmung begünstigt.

Bei dem in Fig. 1 und 2 dargestellten Ausführungsbeispiele wird die Induktionsspule 1 in dem Schwingkreis 5 ausschließlich zur Bestimmung der Oberflächentemperatur des Walzenmantels 6 genutzt. Die Induktionsspule 1 weist hierzu mindestens 10 bis max. 50 Windungen 7 auf. Damit lassen sich eine vorteilhafte Konzentration der Feldlinien der Induktionsspule 1 erreichen.

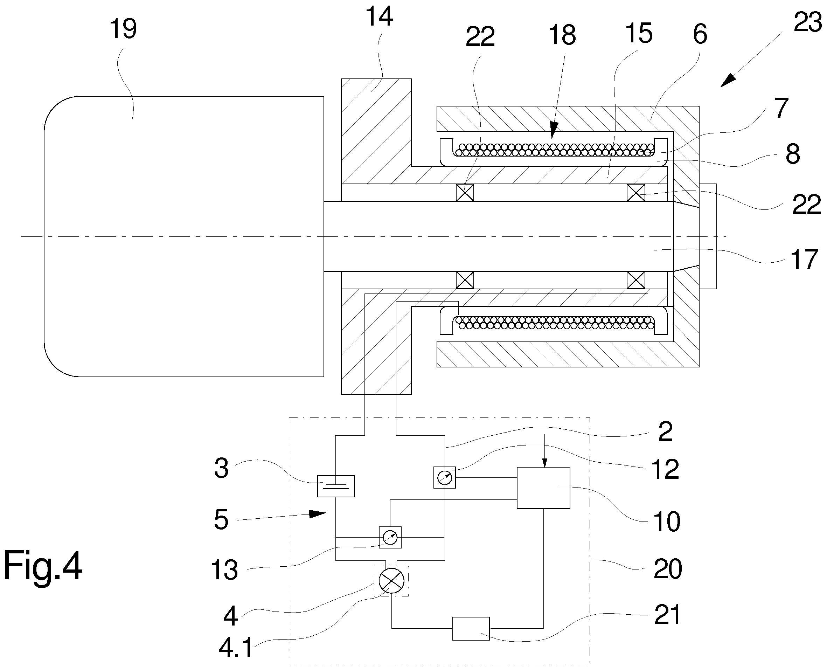

Grundsätzlich besteht jedoch auch die Möglichkeit, die Induktionsspule 1 unmittelbar als eine Heizspule auszubilden und somit gleichzeitig parallel eine Erwärmung des Walzenmantels 6 auszuführen. In Fig. 4 ist ein Ausführungsbeispiel einer Galette gezeigt, die einen rotierenden Walzenmantel 6 aufweist. Die erfindungsgemäße Vorrichtung ist in der Galette 23 integriert. Hierzu ist in Fig. 4 schematisch eine Querschnittsansicht einer Galette 23 gezeigt.

Die Galette 23 weist einen Lagerträger 14 mit einem auskragenden Spulenhalter 15 auf. Der Lagerträger 14 und der Spulenhalter 15 sind hohlzylindrisch ausgebildet. Innerhalb des Lagerträgers 14 und des Spulenhalters 15 ist eine Antriebswelle 17 drehbar über mehrere Lager 22 gelagert. Die Antriebswelle 17 durchdringt den Lagerträger 14 und den Spulenhalter 15 und ist an einem Antriebsende mit einem Motor 19 verbunden. An einem gegenüberliegenden Ende ist die Antriebswelle 17 mit einem topfförmigen Walzenmantel 6 gekoppelt.

Am Umfang des auskragenden Spulenhalters 15 ist eine Heizspule 18 gehalten. Die Heizspule 18 ist konzentrisch zu dem Walzenmantel 6 angeordnet, der mit geringem Abstand zur Heizspule 18 geführt ist. Die Heizspule 18 ist aus einem Spulenträger 8 und einer Mehrzahl von Windungen 7 gebildet. Die Windungen 7 der Heizspule 18 sind mit einer Heizsteuereinheit 20 außerhalb der Galette 23 gekoppelt. Die Heizsteuereinheit 20 weist die mit der Heizspule 18 zu einem Schwingkreis 5 geschalteten Kondensator 3 und ein Spannungsmodul 4.1 auf. Die Heizspule 18 und der Kondensator 3 sind zu einem Reihenschwingkreis 5 geschaltet. In dem Stromkreis 2 ist eine Strommesseinrichtung 12 integriert, die mit einer Auswertungseinrichtung 10 verbunden ist. Ebenso ist dem Reihenschwingkreis 5 eine Spannungsmesseinrichtung 13 zugeordnet, die ebenfalls mit der Auswertungseinrichtung 10 gekoppelt ist. Die Auswertungseinrichtung 10 ist mit einer Steuereinrichtung 21 verbunden, die mit Spannungsmodul 4.1 der Spannungsquelle 4 gekoppelt ist.

Bei dem in Fig. 4 dargestellten Ausführungsbeispiel wird über die Steuereinrichtung 21 das Spannungsmodul 4.1 aktiviert, so dass über den Reihenschwingkreis 5 und der Heizspule 18 ein Strom in dem rotierenden Walzenmantel 6 induziert wird. Der induzierte Strom am Walzenmantel 6 führt zu einer Erwärmung des Walzenmantels 6.

Parallel wird über die Strommesseinrichtung 12 und über die Spannungsmesseinrichtung 13 kontinuierlich der Strom und die Spannung des Reihenschwingkreises 5 gemessen und der Auswertungseinrichtung 10 zugeführt. Innerhalb der Auswertungseinrichtung 10 erfolgt eine Quotienten-bildung zwischen dem Effektivwert der Spannung und dem Effektivwert des Stromes, der zu einer Ist-Temperatur des Galettenmantels überführt wird. Hierzu sind üblicherweise eine oder mehrere Eichkurven hinterlegt. Anschließend wird der ermittelte Ist-Wert der Oberflächentemperatur des Walzenmantels 6 mit einem Soll-Wert der Oberflächentemperatur verglichen. Hierzu ist ein hier nicht dargestellter Komperator vorgesehen, der in der Auswertungseinrichtung 10 oder der Steuereinrichtung 21 integriert sein könnte.

Für den Fall, dass der Ist-Wert der Oberflächentemperatur noch unterhalb des Soll-Wertes der Oberflächentemperatur des Walzenmantels 6 liegt, wird über die Auswertungseinrichtung 10 der Steuereinrichtung 21 ein entsprechendes Signal aufgegeben, so dass die Steuereinrichtung 21 das Spannungsmodul 4.1 weiter aktiviert hält. Für den Fall, dass der Komperator innerhalb der Steuereinrichtung 21 integriert ist, wird ein Steuersignal direkt in der Steuereinrichtung 21 erzeugt.

Sobald der Ist-Wert der Oberflächentemperatur des Walzenmantels den Soll-Wert der Oberflächentemperatur des Walzenmantels erreicht hat oder überschreitet, wird über der Steuereinrichtung 21 das Spannungsmodul 4.1 deaktiviert. Es findet dann keine aktive Aufheizung des Walzenmantels 6 durch die Heizspule 18 mehr statt.

Um kontinuierliche Temperaturüberwachung des Walzenmantels ausführen zu können, wird über ein hinterlegtes Steuerprogramm nach vorbestimmten Zeitintervallen kurze Messphasen erzeugt. Hierzu wird über die Steuereinrichtung 21 das Spannungsmodul 4.1 aktiviert, so dass der Strom und die Spannung des Schwingkreises 5 erfasst werden kann. Für den Fall, dass die Oberflächentemperatur des Walzenmantels 6 auf einen unzulässigen Wert abkühlt, wird eine Heizphase der Heizspule 18 eingeleitet.

Bei der in Fig. 4 dargestellten Galette 23 ist dem Walzenmantel 6 nur eine Heizspule 18 zugeordnet. Grundsätzlich besteht auch die Möglichkeit, dass lang auskragende Walzenmäntel 6 durch mehrere Heizspulen nebeneinander beheizt werden können. Hierbei besteht die Möglichkeit, dass jede Heizspule erfindungsgemäß auch zur Temperaturermittlung genutzt wird. Alternativ könnte jedoch die Messung und Auswertung nur mit Hilfe einer der Heizspulen erfolgen.

### Bezugszeichenliste

- 1: Induktionsspule
- 2: Stromkreis
- 3: Kondensator
- 4: Spannungsquelle
- 4.1: Spannungsmodul
- 5: Schwingkreis
- 6: Walzenmantel
- 7: Windungen
- 8: Spulenträger
- 9: Messvorrichtung
- 9.1: Messmittel
- 10: Auswertungseinrichtung
- 11: Steuergerät
- 12: Strommesseinrichtung
- 13: Spannungsmesseinrichtung
- 14: Lagerträger
- 15: Spulenhalter
- 17: Antriebswelle
- 18: Heizspule
- 19: Motor
- 20: Heizsteuereinheit
- 21: Steuereinrichtung
- 22: Lager
- 23: Galette

## Patentansprüche

1. Verfahren zur Bestimmung einer Oberflächentemperatur eines induktiv beheizten Walzenmantels (6), bei welchem zumindest eine Induktionsspule (1) in dem Walzenmantel (6) ein Strom induziert, bei welchem zumindest ein Parameter eines Stromkreises (2) der Induktionsspule (1) gemessen wird und bei welchem aus dem gemessenen Parameter des Stromkreises (2) und aus gespeicherten Daten ein Ist-Wert der Oberflächentemperatur ermittelt wird, **dadurch gekennzeichnet, dass**
die Induktionsspule (1) in dem Stromkreis (2) mit einem Kondensator (3) zu einem Schwingkreis (5) geschaltete wird und dass der Schwingkreis (5) mit einer Wechselspannungsfrequenz im Bereich von 3000 Hz bis 30.000 Hz betrieben wird.

2. Verfahren nach Anspruch 1, **dadurch gekennzeichnet, dass** als Parameter eine Induktivität der Induktionsspule (1) in einer Betriebsphase des Schwingkreises (5) oder in einer Ruhephase des Schwingkreises (5) gemessen wird.

3. Verfahren nach Anspruch 1, **dadurch gekennzeichnet, dass** als Parameter ein Strom und eine Spannung des Schwingkreises (5) in einer Betriebsphase des Schwingkreises (5) gemessen wird.

4. Verfahren nach Anspruch 3, **dadurch gekennzeichnet, dass** der Strom und die Spannung des Schwingkreises (5) nach Ablauf einer Einschwingphase des Schwingkreises (5) gemessen werden, wobei ein Effektivwert des Stromes und eine Effektivwert der Spannung während einer Messphase bestimmt wird.

5. Verfahren nach einem der Ansprüche 1 bis 4, **dadurch gekennzeichnet, dass** die Induktionsspule (1) als eine Heizspule (18) zur Erwärmung des Walzenmantels (6) genutzt wird.

6. Verfahren nach Anspruch 5, **dadurch gekennzeichnet, dass** der Ist-Wert der Oberflächentemperatur zur Regelung der Heizspule (18) genutzt wird.

7. Vorrichtung zur Bestimmung einer Oberflächentemperatur eines induktiv beheizten Walzenmantels (6), mit zumindest einer Induktionsspule (1), die mit einer Spannungsquelle (4) einen Stromkreis (2) bildet und in dem Walzenmantel (6) einen Strom induziert, mit einer Messvorrichtung (9) zur Erfassung eines Parameters des Stromkreises (2) und mit einer Auswertungseinrichtung (10), die aus dem gemessenen Parameter des Stromkreises (2) und gespeicherten Daten einen Ist-Wert der Oberflächentemperatur ermittelt, **dadurch gekennzeichnet, dass** die Induktionsspule (1) in dem Stromkreis (2) mit einem Kondensator (3) zu einen Schwingkreis (5) geschaltet ist und dass die Spannungsquelle (4) zur Versorgung des Stromkreises (2) ein Spannungsmodul (4.1) aufweist, welches eine Wechselspannung mit einer Frequenz im Bereich von 3.000 Hz bis 30.000 Hz erzeugt.

8. Vorrichtung nach Anspruch 7, **dadurch gekennzeichnet, dass** die Messvorrichtung (9) ein Messmittel (9.1) zur Messung einer Induktivität der Induktionsspule (1) aufweist.

9. Vorrichtung nach Anspruch 7, **dadurch gekennzeichnet, dass** die Messvorrichtung (9) eine Strommesseinrichtung (12) zur Messung eines Stromes und eine Spannungsmesseinrichtung (13) zur Messung einer Spannung aufweist, die dem Schwingkreis (5) zugeordnet sind.

10. Vorrichtung nach einem der Ansprüche 7 bis 9, **dadurch gekennzeichnet, dass** das Spannungsmodul (4.1) zur Aktivierung und Deaktivierung des Schwingkreises (5) mit einer Steuereinrichtung (21) gekoppelt ist.

11. Vorrichtung nach einem der Ansprüche 7 bis 10, **dadurch gekennzeichnet, dass** die Induktionsspule (1) als eine Heizspule (18) ausgebildet ist, die an einem Spulenhalter (15) im kurzen Abstand zu dem Walzenmantel (6) einer Galette (23) gehalten ist.

12. Vorrichtung nach Anspruch 11, **dadurch gekennzeichnet, dass** die Steuereinrichtung (21) mit der Auswerteeinrichtung (10) verbunden ist und dass ein Komparator zu einem Ist-Soll-Vergleich von Oberflächentemperaturen des Walzenmantels (6) vorgesehen ist.

13. Vorrichtung nach einem der Ansprüche 7 bis 12, **dadurch gekennzeichnet, dass** die Induktionsspule (1) eine Anzahl von Windungen (7) im Bereich von 10 bis 50 aufweist.

## Claims

1. Method for determining a surface temperature of an inductively heated roller shell (6), in which at least one induction coil (1) induces a current in the roller shell (6), in which at least one parameter of a circuit (2) of the induction coil (1) is measured, and in which an actual value of the surface temperature is determined from the measured parameter of the circuit (2) and from stored data,
**characterized in that** the induction coil (1) in the circuit (2) is connected to a capacitor (3) to form an oscillating circuit (5), and **in that** the oscillating circuit (5) is operated with an alternating voltage frequency in the range from 3000 Hz to 30,000 Hz.

2. Method as claimed in claim 1, **characterized in that** the parameter that is measured is an inductance of the induction coil (1) in an operating phase of the oscillating circuit (5) or in a quiescent phase of the oscillating circuit (5).

3. Method as claimed in claim 1, **characterized in that** the parameter that is measured is a current and a voltage of the oscillating circuit (5) in an operating phase of the oscillating circuit (5).

4. Method as claimed in claim 3, **characterized in that** the current and the voltage of the oscillating circuit (5) are measured following the expiry of a transient phase of the oscillating circuit (5), wherein an effective value of the current and an effective value of the voltage being determined during a measuring phase.

5. Method as claimed in one of claims 1 to 4, **characterized in that** the induction coil (1) is used as a heating coil (18) for heating the roller shell (6).

6. Method as claimed in claim 5, **characterized in that** the actual value of the surface temperature is used to control the heating coil (18).

7. Device for determining a surface temperature of an inductively heated roller shell (6), having at least one induction coil (1) which forms a circuit (2) with a voltage source (4) and induces a current in the roller shell (6), having a measuring device (9) for measuring a parameter of the circuit (2) and having an evaluation apparatus (10) which determines an actual value of the surface temperature from the measured parameter of the circuit (2) and stored data, **characterized in that** the induction coil (1) in the circuit (2) is connected to a capacitor (3) to form an oscillating circuit (5), and **in that** the voltage source (4) for supplying the circuit (2) has a voltage module (4.1) which generates an alternating voltage with a frequency in the range from 3000 Hz to 30,000 Hz.

8. Device as claimed in claim 7, **characterized in that** the measuring device (9) has a measuring means (9.1) for measuring an inductance of the induction coil (1).

9. Device as claimed in claim 7, **characterized in that** the measuring device (9) has a current measuring apparatus (12) for measuring a current and a voltage measuring apparatus (13) for measuring a voltage, which are assigned to the oscillating circuit (5).

10. Device as claimed in one of claims 7 to 9, **characterized in that** the voltage module (4.1) for activating and deactivating the oscillating circuit (5) is coupled to a control apparatus (21).

11. Device as claimed in one of claims 7 to 10, **characterized in that** the induction coil (1) is formed as a heating coil (18), which is held on a coil holder (15) at a short distance from the roller shell (6) of a godet (23).

12. Device as claimed in claim 11, **characterized in that** the control apparatus (21) is connected to the evaluation apparatus (10), and **in that** a comparator is provided for an actual-intended comparison of surface temperatures of the roller shell (6).

13. Device as claimed in one of claims 7 to 12, **characterized in that** the induction coil (1) has a number of windings (7) in the range from 10 to 50.

## Revendications

1. Procédé de détermination d'une température de surface d'une chemise de cylindre (6) chauffée par induction, selon lequel au moins une bobine d'induction (1) induit un courant dans la chemise de cylindre (6), selon lequel au moins un paramètre d'un circuit électrique (2) de la bobine d'induction (1) est mesuré et selon lequel une valeur réelle de la température de surface est déterminée à partir du paramètre mesuré du circuit électrique (2) et à partir de données enregistrées, **caractérisé en ce que** la bobine d'induction (1) dans le circuit électrique (2) est connectée à un condensateur (3) pour former un circuit oscillant (5) et **en ce que** le circuit oscillant (5) fonctionne avec une fréquence de tension alternative dans la plage de 3000 Hz à 30 000 Hz.

2. Procédé selon la revendication 1, **caractérisé en ce que** le paramètre mesuré est une inductance de la bobine d'induction (1) dans une phase de fonctionnement du circuit oscillant (5) ou dans une phase de repos du circuit oscillant (5).

3. Procédé selon la revendication 1, **caractérisé en ce que** le paramètre mesuré est un courant et une tension du circuit oscillant (5) dans une phase de fonctionnement du circuit oscillant (5).

4. Procédé selon la revendication 3, **caractérisé en ce que** le courant et la tension du circuit oscillant (5) sont mesurés après écoulement d'une phase transitoire du circuit oscillant (5), une valeur effective du courant et une valeur effective de la tension étant déterminées pendant une phase de mesure.

5. Procédé selon l'une des revendications 1 à 4, **caractérisé en ce que** la bobine d'induction (1) est utilisée comme bobine de chauffage (18) pour le réchauffement de la chemise de cylindre (6).

6. Procédé selon la revendication 5, **caractérisé en ce que** la valeur réelle de la température de surface est utilisée pour la régulation de la bobine chauffante (18).

7. Dispositif de détermination d'une température de surface d'une chemise de cylindre (6) chauffée par induction, comprenant au moins une bobine d'induction (1) qui forme un circuit électrique (2) avec une source de tension (4) et qui induit un courant dans la chemise de cylindre (6), comprenant un dispositif de mesure (9) destiné à acquérir un paramètre du circuit électrique (2) et comprenant un appareil d'interprétation (10) qui détermine une valeur réelle de la température de surface à partir du paramètre mesuré du circuit électrique (2) et de données enregistrées, **caractérisé en ce que** la bobine d'induction (1) dans le circuit électrique (2) est connectée à un condensateur (3) pour former un circuit oscillant (5) et **en ce que** la source de tension (4) destinée à alimenter le circuit électrique (2) possède un module de tension (4.1) qui génère une tension alternative ayant une fréquence dans la plage de 3000 Hz à 30 000 Hz.

8. Dispositif selon la revendication 7, **caractérisé en ce que** le dispositif de mesure (9) possède un moyen de mesure (9.1) destiné à mesurer une inductance de la bobine d'induction (1).

9. Dispositif selon la revendication 7, **caractérisé en ce que** le dispositif de mesure (9) possède un appareil de mesure du courant (12) destiné à mesurer un courant et un appareil de mesure de tension (13) destiné à mesurer une tension, lesquels sont associés au circuit oscillant (5).

10. Dispositif selon l'une des revendications 7 à 9, **caractérisé en ce que** le module de tension (4.1) est connecté à un appareil de commande (21) pour l'activation et la désactivation du circuit oscillant (5).

11. Dispositif selon l'une des revendications 7 à 10, **caractérisé en ce que** la bobine d'induction (1) est réalisée sous la forme d'une bobine de chauffage (18) qui est maintenue sur un porte-bobine (15) à courte distance de la chemise de cylindre (6) d'une galette (23).

12. Dispositif selon la revendication 11, **caractérisé en ce que** l'appareil de commande (21) est relié à l'appareil d'interprétation (10) et **en ce qu'**un comparateur est présent pour réaliser une comparaison réel/consigne de températures de surface de la chemise de cylindre (6).

13. Dispositif selon l'une des revendications 7 à 12, **caractérisé en ce que** la bobine d'induction (1) possède un nombre de spires (7) dans la plage de 10 à 50.
